# EUROPÄISCHE PATENTSCHRIFT

(11) **EP 2 912 307 B1**
(45) Veröffentlichungstag und Bekanntmachung des Hinweises auf die Patenterteilung: **20.02.2019**
(21) Anmeldenummer: 13788880.6
(22) Anmeldetag: 29.10.2013
(51) Int. Cl.: F03D 1/06

(54) **ROTORBLATT FÜR WINDTURBINE**
ROTOR BLADE FOR A WIND TURBINE
PALE D'UNE ÉOLIENNE

(30) Priorität: 29.10.2012 CH 21712012
(43) Veröffentlichungstag der Anmeldung: 02.09.2015
(73) Patentinhaber: Wepfer Technics AG, 8450 Andelfingen (CH)
(72) Erfinder: WEPFER, Hans, Ch-8471 Berg-Dägerlen (CH)
(74) Vertreter: Keller & Partner Patentanwälte AG
(86) Internationale Anmeldenummer: PCT/CH2013/000188
(87) Internationale Veröffentlichungsnummer: WO 2014/067020

(56) Entgegenhaltungen:
- EP-A1- 1 832 744
- EP-A1- 2 416 005
- WO-A2-2007/147177
- WO-A2-2011/056767
- DE-C- 830 627
- US-A1- 2011 293 420

## Beschreibung

### Technisches Gebiet

Die vorliegende Erfindung bezieht sich auf ein Rotorblatt und einen entsprechenden Rotor für Windturbinen.

### Stand der Technik

Seit Längerem sind lange, sehr schlanke Rotorblätter für 3-flügelige Windturbinen bekannt. Um höhere Leistungen zu erzielen, sind bisher die Rotorblätter länger und der Rotorkreis grösser geworden. Dadurch nimmt das Trägheitsmoment zu, was wiederum dazu führt, dass Böen kaum mehr nutzbar sind. Auch sind Blattspitzengeräusche nicht unterdrückbar. Die Herstellungs- und Wartungskosten bleiben sehr hoch.

Beispiele für bekannte Windenergieanlagen sind z.B. aus WO 2007/147177, WO 2011/056767 und EP 1832744 bekannt.

Es ist somit eine Aufgabe der Erfindung, ein Rotorblatt und einen entsprechenden Rotor bereitzustellen, mit erheblich kürzeren Rotorblättern und engerem, damit verbundenem Rotorkreis. Insbesondere soll ein Rotorblatt und ein Rotor bereitgestellt werden, dessen konstruktive Auslegung Material und Wartungskosten spart.

### Darstellung der Erfindung

Die Lösung der Aufgabe ist durch die Merkmale der unabhängigen Ansprüche definiert.

Ein Aspekt der vorliegenden Erfindung betrifft ein Rotorblatt für eine Windturbine. Das Rotorblatt hat eine Flügelwurzel als Ansatz an eine Nabe mit einem bestimmten ersten Durchmesser, und ein der Flügelwurzel entgegengesetztes Rotorblattende mit einem bestimmten zweiten Durchmesser. Das Rotorblatt hat zudem eine Hinterkante und eine Vorderkante in Bezug zur Schneidrichtung, d. h. der Richtung, in der das Rotorblatt im Betrieb rotiert, wobei die Vorderkante und die Hinterkante je eine Krümmung aufweisen. Der besagte erste Durchmesser des Rotorblattes ist kleiner als der zweite Durchmesser.

In einer besonderen Ausführungsform nimmt der Durchmesser des Rotorblattes vom ersten Durchmesser an der Flügelwurzel bis zum zweiten Durchmesser am Rotorblattende zu. Im Sinne der vorliegenden Erfindung heisst das, dass der Durchmesser von der Flügelwurzel nach aussen zum Rotorblattende zunehmend ist.

In einer besonderen Ausführungsform weist das Rotorblatt eine Rotorwölbungsachse auf, die dermassen verläuft, dass die Vorderkante, in Frontansicht, an der Flügelwurzel eine erste Wölbungshöhe hat, die tiefer ist als eine mittlere Wölbungshöhe in der Mitte des Rotorblattes, welche wiederum höher ist als eine endseitige Wölbungshöhe am Rotorblattende.

In einer alternativen besonderen Ausführungsform weist das Rotorblatt eine alternative Rotorwölbungsachse auf, die dermassen verläuft, dass die Vorderkante, in Frontansicht, an der Flügelwurzel eine erste Wölbungshöhe hat, die insbesondere im Wesentlichen gleich hoch ist wie eine mittlere Wölbungshöhe in der Mitte des Rotorblattes, welche wiederum höher ist als eine endseitige Wölbungshöhe am Rotorblattende.

In einer weiteren alternativen besonderen Ausführungsform weist das Rotorblatt eine Rotorwölbungsachse auf, die dermassen verläuft, dass die Vorderkante, in Frontansicht, an der Flügelwurzel eine erste Wölbungshöhe hat, die höher ist als eine mittlere Wölbungshöhe in der Mitte des Rotorblattes, welche wiederum höher ist als eine endseitige Wölbungshöhe am Rotorblattende.

In einer besonderen Ausführungsform umfasst das Rotorblattende ein Doppelwinglet.

In einer besonderen Ausführungsform umfasst das Rotorblattende ein Winglet auf der Profiloberseite.

In einer besonderen Ausführungsform umfasst das Rotorblattende ein Winglet auf der Profilinnenseite.

In einer besonderen Ausführungsform ist das Rotorblatt aus einer Aluminiumplatte gefertigt, insbesondere besteht es aus Aluminium.

In einer besonderen Ausführungsform ist das Rotorblatt aus Verbundwerkstoff gefertigt, insbesondere besteht es aus Verbundwerkstoff.

Ein weiterer Aspekt der vorliegenden Erfindung betrifft einen Rotor, umfassend mindestens ein eingangs geschildertes Rotorblatt. Der Rotor ist mit zwei bis sechzehn solcher Rotorblätter ausgestattet, die über ihre Flügelwurzel mit einer Nabe verbunden sind.

### Kurze Beschreibung der Zeichnungen

Aus der nachfolgenden Detailbeschreibung und der Gesamtheit der Patentansprüche ergeben sich weitere vorteilhafte Ausführungsformen und Merkmalskombinationen der Erfindung.

Die Leistungskompensation dieses vergleichsweise kleineren Rotors wird im Folgenden anhand der Zeichnung näher erläutert. Die zur Erläuterung des Ausführungsbeispiels verwendeten Zeichnungen zeigen:
Fig.1 zeigt ein erfindungsgemässes Rotorblatt in Draufsicht;
Fig.2 zeigt ein erfindungsgemässes Rotorblatt in Frontsicht;
Fig.3 zeigt ein Rotorblattende in Seitenansicht mit Doppelwinglet;
Fig.4 zeigt ein Rotorblattende in Frontansicht mit Doppelwinglet;
Fig.5 zeigt ein Rotorblattende in Seitenansicht mit Winglet auf der Profiloberseite;
Fig.6 zeigt ein Rotorblattende in Frontansicht mit Winglet auf der Profiloberseite;
Fig.7 zeigt ein Rotorblattende in Seitenansicht mit Winglet auf der Profilinnenseite, und
Fig.8 zeigt ein Rotorblattende in Frontansicht mit Winglet auf der Profilinnenseite.

Grundsätzlich sind in den Figuren gleiche Teile mit gleichen Bezugszeichen versehen.

### Wege zur Ausführung der Erfindung

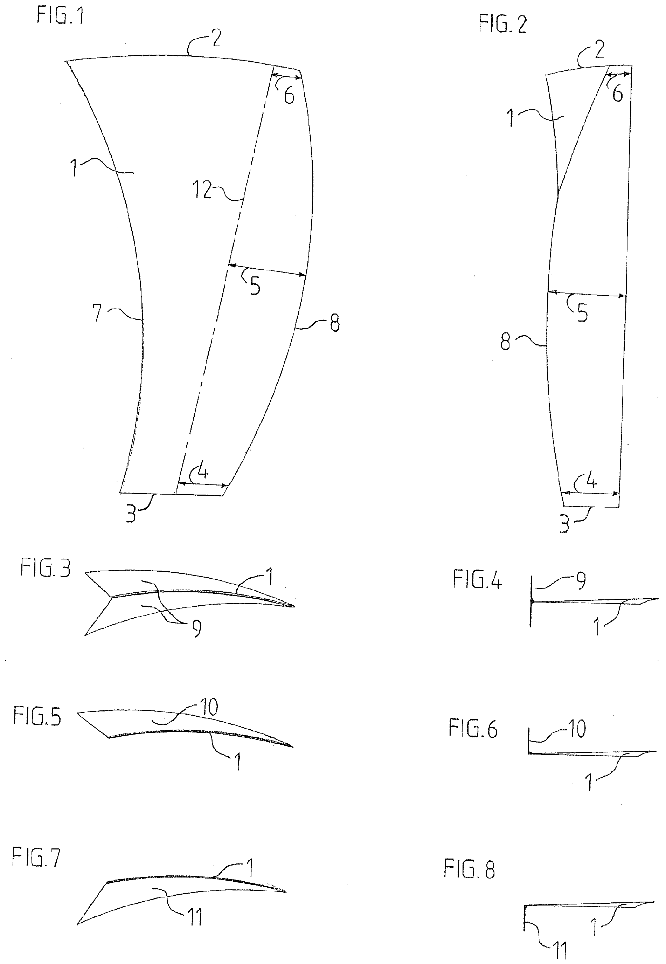

Die **Fig. 1** zeigt ein Rotorblatt 1, wo erfindungsgemäss die Hinterkante 7 und die Vorderkante 8 mit einem Radius versehen ist, das heisst Vorderkante 8 und Hinterkante 7 weisen je eine Krümmung auf. Die Krümmung erstreckt sich sichelförmig von einer Flügelwurzel 3, so dass eine sensenförmige Form des Rotorblattes 1 entsteht. Der Durchmesser des Rotorblattes 1 an der Flügelwurzel 3 ist kürzer als der Durchmesser des Rotorblattes 1 am Rotorblattende, das heisst, die Rotorblatttiefe nimmt nach aussen zu. Mit anderen Worten handelt es sich beim gezeigten Rotorblatt 1 um eine Sichelform, welche gegen aussen, das heisst am von einer Nabe (nicht gezeigt) abgewandten Ende, breiter ist als am nabenseitigen Ende. Das Rotorblattende 2 weist ebenfalls eine Krümmung auf. Die jeweiligen Krümmungen der Vorderkante 8 und der Hinterkante 7 verlaufen nicht parallel zueinander, sondern entfernen sich zunehmend im Verlauf des Abstands von der Flügelwurzel 3.

Das gezeigte Rotorblatt weist zudem eine Wölbung auf. Dabei bestimmt eine Rotorblattwölbungsachse 12 mit ihren Eckwerten, der ersten Wölbungshöhe 4, der mittleren Wölbungshöhe 5 und der endseitigen Wölbungshöhe 6 die Form des Rotorblattes 1.

Besser ersichtlich ist die Wölbung des erfindungsgemässen Rotorblattes in der Fig. 2. Diese zeigt ein Rotorblatt 1 in Frontansicht, das heisst von der Richtung, in die sich das Rotorblatt im Betrieb bewegt aus betrachtet, wo ersichtlich wird, dass die Vorderkante 8 nach aussen zum Rotorblattende 2 hin flacher, also weniger hoch wird. Die endseitige Wölbungshöhe 6 ist im Vergleich zur mittleren Wölbungshöhe 5 tiefer. Die mittlere Wölbungshöhe 6 ist im Vergleich zur ersten Wölbungshöhe 4 an der Flügelwurzel 3 höher.

In den Fig. 3 und 4 wird ein Doppelwinglet 9 am Rotorblattende 2 gezeigt, wo über das ganze Rotorblattende 2 eine Luftabströmung innen, sowie auf der Oberseite verhindert wird.

In den Fig. 5 und 6 wird ein ein Winglet 10 auf dem Rotorblattende gezeigt, wo über die ganze Profiloberseite die Luftabströmung verhindert wird.

In den Fig. 7 und 8 ist ein Winglet 11 auf dem Rotorblattende 2 gezeigt, wo über die ganze Profilinnenseite die Luftabströmung verhindert wird.

## Patentansprüche

1. Rotorblatt (1) für eine Windturbine, mit
a) einer Flügelwurzel (3) als Ansatz an eine Nabe mit einem ersten Durchmesser, und
b) einem der Flügelwurzel (3) entgegengesetzten Rotorblattende (2) mit einem zweiten Durchmesser, sowie
c) einer Hinterkante (7) und einer Vorderkante (8) in Bezug zur Schneidrichtung des Rotorblatts (1) im Betrieb, und wobei die Vorderkante (8) und die Hinterkante (7) je eine Krümmung aufweist, und wobei der erste Durchmesser kleiner ist als der zweite Durchmesser,
**dadurch gekennzeichnet, dass**
d) das Rotorblatt (1) eine Rotorwölbungsachse (12) hat, die dermassen verläuft, dass die Vorderkante (8), in Frontansicht, an der Flügelwurzel (3) eine erste Wölbungshöhe (4) hat, die tiefer, im Wesentlichen gleich hoch oder höher ist als eine mittlere Wölbungshöhe (5) in der Mitte des Rotorblattes (1), welche wiederum höher ist als eine endseitige Wölbungshöhe (6) am Rotorblattende (2).

2. Rotorblatt (1) gemäss Anspruch 1, wobei der Durchmesser des Rotorblattes (1) vom ersten Durchmesser an der Flügelwurzel bis zum zweiten Durchmesser am Rotorblattende (2) zunimmt.

3. Rotorblatt (1) gemäss einem der Ansprüche 1 bis 2, wobei das Rotorblattende (2) ein Doppelwinglet (9) umfasst.

4. Rotorblatt (1) gemäss einem der Ansprüche 1 bis 2, wobei das Rotorblattende (2) ein Winglet (10) auf der Profiloberseite umfasst.

5. Rotorblatt (1) gemäss einem der Ansprüche 1 bis 3, wobei das Rotorblattende (2) ein Winglet (11) auf der Profilinnenseite umfasst.

6. Rotorblatt (1) gemäss einem der Ansprüche 1 bis 5 wobei das Rotorblatt (1) aus einer Aluminiumplatte gefertigt ist, insbesondere aus Aluminium besteht.

7. Rotorblatt (1) gemäss einem der Ansprüche 1 bis 5, wobei das Rotorblatt (1) aus Verbundwerkstoff gefertigt ist, insbesondere aus Verbundwerkstoff besteht.

8. Rotor, umfassend mindestens ein Rotorblatt (1) gemäss einem der Ansprüche 1 bis 7, wobei der Rotor zwei bis sechzehn Rotorblätter (1) gemäss Anspruch 1 umfasst.

## Claims

1. Rotor blade (1) for a wind turbine, comprising
a) a wing root (3) as an attachment to a hub, with a first diameter, and
b) a rotor blade end (2) which is opposite the wing root (3), with a second diameter, and
c) a trailing edge (7) and a leading edge (8) with respect to the slicing direction of the rotor blade (1) during operation, and wherein the leading edge (8) and the trailing edge (7) each have a curvature, and wherein the first diameter is smaller than the second diameter,
**characterized in that**
d) the rotor blade (1) has a rotor camber axis (12) which runs in such a manner that the leading edge (8), in front view, has a first camber height (4) at the wing root (3) that is lower, in substantially the same height or higher than a central camber height (5) in the center of the rotor blade (1) that, in turn, is higher than an end-side camber height (6) at the rotor blade end (2).

2. Rotor blade (1) according to Claim 1, wherein the diameter of the rotor blade (1) increases from the first diameter at the wing root as far as the second diameter at the rotor blade end (2).

3. Rotor blade (1) according to one of Claims 1 to 2, wherein the rotor blade end (2) comprises a double winglet (9).

4. Rotor blade (1) according to one of Claims 1 to 2, wherein the rotor blade end (2) comprises a winglet (10) on the upper side of the profile.

5. Rotor blade (1) according to one of Claims 1 to 3, wherein the rotor blade (2) comprises a winglet (11) on the inner side of the profile.

6. Rotor blade (1) according to one of Claims 1 to 5, wherein the rotor blade (1) is manufactured from an aluminum plate, in particular is composed of aluminum.

7. Rotor blade (1) according to one of Claims 1 to 5, wherein the rotor blade (1) is manufactured from composite material, in particular is composed of composite material.

8. Rotor comprising at least one rotor blade (1) according to one of Claims 1 to 7, wherein the rotor comprises two to sixteen rotor blades (1) according to Claim 1.

## Revendications

1. Pale de rotor (1) pour une éolienne, comprenant
a) une emplanture d'aile (3) en tant que pièce rapportée à un moyeu avec un premier diamètre, et
b) une extrémité de pale de rotor (2) opposée à l'emplanture d'aile (3), avec un deuxième diamètre, et
c) une arête arrière (7) et une arête avant (8) par rapport à la direction de coupe de la pale de rotor (1) pendant le fonctionnement, et l'arête avant (8) et l'arête arrière (7) présentant chacune une courbure et le premier diamètre étant inférieur au deuxième diamètre,
**caractérisée en ce que**
d) la pale de rotor (1) présente un axe de courbure de rotor (12) qui s'étend de telle sorte que l'arête avant (8), en vue de face, présente une première hauteur de courbure (4) au niveau de l'emplanture d'aile (3), qui est plus basse, essentiellement à la même hauteur ou plus haute qu'une hauteur de courbure centrale (5) au milieu de la pale de rotor (1), qui est à son tour plus haute qu'une hauteur de courbure du côté de l'extrémité (6) à l'extrémité de la pale de rotor (2) .

2. Pale de rotor (1) selon la revendication 1, le diamètre de la pale de rotor (1) augmentant depuis le premier diamètre au niveau de l'emplanture d'aile jusqu'au deuxième diamètre au niveau de l'extrémité de pale de rotor (2).

3. Pale de rotor (1) selon l'une quelconque des revendications 1 à 2, l'extrémité de pale de rotor (2) comprenant une double ailette (9).

4. Pale de rotor (1) selon l'une quelconque des revendications 1 à 2, l'extrémité de pale de rotor (2) comprenant une ailette (10) sur le côté supérieur du profilé.

5. Pale de rotor (1) selon l'une quelconque des revendications 1 à 3, l'extrémité de pale de rotor (2) comprenant une ailette (11) sur le côté intérieur du profilé.

6. Pale de rotor (1) selon l'une quelconque des revendications 1 à 5, la pale de rotor (1) étant fabriquée à partir d'une plaque d'aluminium, en particulier se compose d'aluminium.

7. Pale de rotor (1) selon l'une quelconque des revendications 1 à 5, la pale de rotor (1) étant fabriquée en un matériau composite, en particulier se compose d'un matériau composite.

8. Rotor comprenant au moins une pale de rotor (1) selon l'une quelconque des revendications 1 à 7, le rotor comprenant deux à seize pales de rotor (1) selon la revendication 1.
